# EUROPÄISCHE PATENTSCHRIFT

(11) **EP 3 981 360 B1**
(45) Veröffentlichungstag und Bekanntmachung des Hinweises auf die Patenterteilung: **30.07.2025**
(21) Anmeldenummer: 21211981.2
(22) Anmeldetag: 28.11.2018
(51) Int. Cl.: A61C 13/00, A61C 8/00

(54) **VERFAHREN ZUR HERSTELLUNG EINES ZAHNERSATZTEILS AUS EINEM ZAHNERSATZFORMBLOCK**
METHOD FOR MANUFACTURING A DENTAL PROSTHETIC ITEM FROM A DENTAL PROSTHESIS BLOCK
PROCÉDÉ DE FABRICATION D'UNE PROTHÈSE DENTAIRE À PARTIR D'UN BLOC DE MOULAGE DE PROTHÈSE DENTAIRE

(30) Priorität: 28.11.2017 DE 102017221344
(43) Veröffentlichungstag der Anmeldung: 13.04.2022
(62) Teilanmeldung aus: 18825865.1
(73) Patentinhaber: Sirona Dental Systems GmbH, 64625 Bensheim (DE)
(72) Erfinder: Schneider, Sascha, 64625 Bensheim (DE); Fornoff, Peter, 64625 Bensheim (DE)
(74) Vertreter: Allen, Caroline Margaret

(56) Entgegenhaltungen:
- EP-A1- 0 160 797
- WO-A1-2008/009272
- DE-A1- 19 654 055
- KR-A- 20130 097 820
- US-A1- 2007 264 612
- US-A1- 2012 251 979

## Beschreibung

### Technisches Gebiet

Die vorliegende Erfindung betrifft ein Verfahren zur Herstellung eines Zahnersatzteils aus einem Zahnersatzformblock.

### Stand der Technik

Einteilige Zahnimplantate, bei denen der Abutment-Teil fest mit dem Implantat verbunden ist, werden bisher in Standardformen vorproduziert. Diese Standardimplantate können beispielsweise aus Keramik oder Titan bestehen und linear oder auch abgewinkelt sein. Die Individualisierung der einteiligen Standardimplantate ist allerdings schwierig, da die vorproduzierten Teile dafür unter Berücksichtigung einer späteren Einschraubrotation und Einschraubhöhe extraoral gehalten und bearbeitet werden müssen. Standardimplantate erst nach dem Einsetzen und Einheilen in den Kiefer zu individualisieren ist sehr schwierig, da die einzubringende Energie die Teile erwärmen oder lockern könnte.

Eine Alternative zu den Standardimplantaten besteht deshalb in Implantaten, die aus mehreren Teilen bestehen. Hierbei ist eine Implantatschraube ein separates Standardteil, das in einen individualisierbare Abutment-Aufbau eingeschraubt werden kann. Dieser kann dann problemlos extraoral bearbeitet werden. Allerdings kann es bei einem mehrteiligen Implantat zu Spaltenbildung zwischen den einzelnen Elementen kommen. Durch diese können Bakterien in das Innere des Implantats wandern und von dort durch mechanische Effekte des Kauens stoßweise über die Zeit herauswandern und den Knochen infizieren. Dies führt zu einer Periimplantitis, die sich in Knochenrückgang und einem daraus folgenden Implantatverlust äußert. Außerdem kann es in mehrteiligen Implantaten zu einem mechanischen Verschleiß an der Verbindung der Elemente kommen. Nach mehreren Millionen Kauzyklen lockert sich die Schraube und damit auch der Aufbau oder die Schraube zerbricht sogar.

Zur Herstellung der Aufbauten mehrteiliger Implantate kommen zunehmend automatisierte CAD/CAM-Verfahren zum Einsatz, in denen aus einem Zahnersatzformblock das jeweilige Zahnersatzteil herausgearbeitet wird. Dies ermöglicht es den Herstellern eine hohe gleichbleibende Qualität und Passgenauigkeit des Zahnersatzes bei gleichzeitig günstigen Preisen anzubieten.

US2012251979A1 offenbart Rohlinge für Zahnimplantate und Verfahren zu deren Herstellung. WO2008009272A1 offenbart Implantate.

Es ist eine Aufgabe der vorliegenden Erfindung, einen Zahnersatzformblock bereitzustellen, aus dem mittels eines CAD/CAM-Verfahrens ein Zahnersatzteil gefertigt werden kann, welches nicht die oben angeführten Nachteile mehrteiliger Implantate aufweist. Eine weitere Aufgabe der Erfindung besteht darin, ein Verfahren zur Herstellung eines derartigen Zahnersatzteils bereitzustellen.

### Darstellung der Erfindung

Diese Aufgabe wird durch das Verfahren nach Anspruch 1 gelöst. Die Gegenstände der abhängigen Ansprüche beziehen sich auf weitere vorteilhafte Ausführungsformen.

Erfindungsgemäß wird ein Zahnersatzformblock zur Herstellung eines Zahnersatzteils, insbesondere eines Implantats, bereitgestellt, welcher ein inneres Material aufweist, das zumindest teilweise von einem äußeren Material umgeben ist. Die Härte des inneren Materials unterscheidet sich von der Härte des äußeren Materials. Unter der Härte wird dabei insbesondere die Vikers-Härte gemäß der Norm DIN EN ISO 6507-1:2005 bis -4:2005 verstanden. Auf diese Weise kann das innere Material als Ausgangsmaterial zur Herstellung eines Stifts mit einem selbstschneidenden Außengewinde verwendet werden und das äußere Material kann als Ausgangsmaterial für einen Aufbau dienen.

Das innere Material bildet einen Teil einer ersten Oberfläche des Zahnersatzformblocks. Durch Materialabtragung wird aus der ersten Oberfläche der Stift herausgearbeitet.

Es ist also möglich extraoral mittels eines CAD/CAM-Verfahrens ein einteiliges Zahnersatzteil in Form eines Implantats zu fertigen. Dieses vereint den Vorteil der einteiligen Ausführung von Standardimplantaten, dass keine Lockerung von Einzelkomponenten stattfinden kann und dass sich in dem Implantat keine Spalten bilden können, welche von Bakterien besiedelt werden, mit dem Vorteil mehrteiliger Implantate, dass eine extraorale Fertigung des Aufbaus möglich ist. Diese Fertigung muss nicht in einem zahnmedizinischen Labor erfolgen, sondern kann auch in einer Zahnarztpraxis durchgeführt werden.

Das innere Material ist an der ersten Oberfläche vorzugsweise vollständig von dem äußeren Material umgeben. Alle anderen Oberflächen des Zahnersatzformblocks bestehen vorzugsweise aus dem äußeren Material. Auf diese Weise ragt der Stift nach der Materialabtragung aus der ersten Oberfläche heraus und ist ansonsten vollständig von dem äußeren Material umgeben.

In einer bevorzugten Ausführungsform weist das innere Material eine geringere Härte als das äußere Material auf. Besonders bevorzugt ist das innere Material ein Metall, wie insbesondere Titan (Vikers-Härte ca. 200 HV 10). Das äußere Material ist in dieser Ausführungsform besonders bevorzugt eine Keramik, wie insbesondere Zirkoniumdioxid (ZrO₂, Vikers-Härte ca. 1250 HV 10) oder eine Lithiumdisilikat- (Vikers-Härte ca. 650 HV 10) oder Glaskeramik. Dies ermöglicht auf der einen Seite eine sichere Verankerung des Zahnersatzteils im Kiefer mittels des aus dem inneren Material gebildeten Metallstifts und auf der anderen Seite eine ästhetisch ansprechende Gestaltung des Aufbaus aus der Keramik. Dabei erhält der Aufbau dadurch eine besondere Stabilität, dass das Metall als inneres Material auch im fertigen Implantat zumindest teilweise von einem äußeren Material umgeben ist. Zudem ist der Stift einstückig mit dem inneren Material gebildet, welches in der Keramik verbleibt. Dabei weist das innere Material in einer Ausführungsform eine größere Härte als das äußere Material auf. Besonders bevorzugt handelt es sich beim dem inneren Material um ein Metall und bei dem äußeren Material um eine Keramik.

In einer anderen besonders bevorzugten Ausführungsform handelt es sich bei dem inneren Material und dem äußeren Material um Metalle. Hierbei ist das Metall des äußeren Materials härter als das Metall des inneren Materials. Als inneres Material ist Titan (Vikers-Härte ca. 200 HV 10) wegen guter Biokompatibilität und Einheileigenschaften vorteilhaft, als äußeres Material ist eine Cobalt-Chrom-Legierung (CoCr, Vikers-Härte ca. 300 HV 10) wegen der Wirtschaftlichkeit vorteilhaft.

In noch einer anderen Ausführungsform weist das innere Material eine größere Härte als das äußere Material auf. Als inneres Material ist Zirkoniumdioxid (ZrO₂, Vikers-Härte ca. 1250 HV 10) wegen der Biokompatibilität und Ästhetik vorteilhaft, als äußeres Material ist eine Cobalt-Chrom-Legierung (CoCr, Vikers-Härte ca. 300 HV 10) wegen der Wirtschaftlichkeit oder eine Lithiumdisilikat- (Vikers-Härte ca. 650 HV 10) oder Glaskeramik wegen der Ästhetik und Verarbeitbarkeit vorteilhaft.

In einer bevorzugten Form des Zahnersatzblocks weist er ein Innengewinde auf, welches von einer zweiten Oberfläche in das innere Material hineinreicht. Die zweite Oberfläche liegt der ersten Oberfläche gegenüber. Hierdurch können nach Fertigung des einteiligen Implantats weitere Elemente auf dieses aufgeschraubt werden.

Im erfindungsgemäßen Verfahren wird zunächst ein Zahnersatzformblock bereitgestellt. Das Zahnersatzteil wird durch Materialabtragung aus dem Zahnersatzformblock hergestellt. Diese erfolgt mittels eines CAD/CAM-Verfahrens. Dabei wird aus einem Teil des inneren Materials ein Stift mit einem selbstschneidenden Außengewinde gebildet.

Das Verfahren ermöglicht es also, bekannte CAD/CAM-Techniken einzusetzen, um aus dem Zahnersatzformblock ein einteiliges Zahnersatzteil, insbesondere ein Implantat, herzustellen.

Grundsätzlich kann der Zahnersatzformblock aus einem einzigen Material bestehen, beispielsweise aus Zirkoniumdioxid. Dann wird die Richtung der Materialabtragung so gewählt, dass der Stift aus einem Teil des inneren Materials gebildet wird.

Anders als bei der Bearbeitung von einteiligen Standardimplantaten, welche mittels ihres Stifts eingespannt werden müssen, kann der Zahnersatzformblock in einem CAD/CAM-Verfahren über eine seiner Oberflächen fixiert werden. Der Stift wird dann vorzugsweise zuerst in einem ersten Bereich des Zahnersatzformblocks durch vollständiges Abtragen des äußeren Materials und teilweises Abtragen des inneren Materials gebildet. Dann wird in einem zweiten Bereich des Zahnersatzformblocks das äußere Material teilweise abgetragen, so dass das innere Material im zweiten Bereich an keiner Oberfläche des Zahnersatzformblocks freigelegt wird. Die Herstellung des Zahnersatzteils erfolgt vorzugsweise in Abhängigkeit von Daten eines Patienten, so dass es individuell an die Bedürfnisse des Patienten angepasst werden kann.

Wenn der Zahnersatzformblock ein Innengewinde aufweist, welches von der zweiten Oberfläche in das in das innere Material hineinreicht, wird das Zahnersatzteil vorzugsweise so hergestellt, dass ein Zahnersatzversorgungelement in das Innengewinde des Zahnersatzteils eingeschraubt werden kann. Bei dem Zahnersatzversorgungelement kann es sich beispielsweise um ein Abutment handeln. In dieser Ausführungsform bildet das einstückige Zahnersatzteil dann lediglich einen Sockel für das Abutment.

Ferner wird ein Computerprogramm offenbart, welches nicht Teil der beanspruchten Erfindung ist und welches dazu ausgebildet ist, alle Schritte des erfindungsgemäßen Verfahrens auszuführen, wenn es auf einem Rechengerät abläuft. Es ermöglicht die Implementierung unterschiedlicher Ausführungsformen des Verfahrens auf einem Rechengerät eines dentalen CAD/CAM-Systems, ohne hieran bauliche Veränderungen vornehmen zu müssen. Hierzu ist es insbesondere auf einem maschinenlesbaren Datenträger gespeichert.

Durch Aufspielen des Computerprogramms auf ein herkömmliches dentales CAD/CAM-System, wird ein dentales CAD/CAM-System erhalten, welches eingerichtet ist, um das Verfahren auszuführen.

Kurze Beschreibung der Zeichnungen Ausführungsbeispiele der Erfindungen sind in Zeichnungen dargestellt und werden in der nachfolgenden Beschreibung näher erläutert.
Fig. 1 zeigt eine isometrische Darstellung eines Zahnersatzformblocks gemäß einem Ausführungsbeispiel der Erfindung.
Fig. 2 zeigt eine Querschnittansicht des Zahnersatzformblocks gemäß Fig. 1.
Fig. 3 zeigt eine isometrische Darstellung eines Zahnersatzformblocks gemäß einem anderen Ausführungsbeispiel der Erfindung.
Fig. 4 zeigt eine Querschnittansicht des Zahnersatzformblocks gemäß Fig. 3.
Fig. 5 zeigt einen ersten Bearbeitungsschritt eines Zahnersatzformblocks in einem Verfahren gemäß einem Ausführungsbeispiel der Erfindung.
Fig. 6 zeigt einen zweiten Bearbeitungsschritt eines Zahnersatzformblocks in einem Verfahren gemäß einem Ausführungsbeispiel der Erfindung.
Fig. 7 zeigt einen dritten Bearbeitungsschritt eines Zahnersatzformblocks in einem Verfahren gemäß einem Ausführungsbeispiel der Erfindung.
Fig. 8 zeigt eine Querschnittdarstellung eines Zahnersatzteils, welches mittels eines Ausführungsbeispiels des erfindungsgemäßen Verfahrens herstellbar ist.

### Ausführungsbeispiele

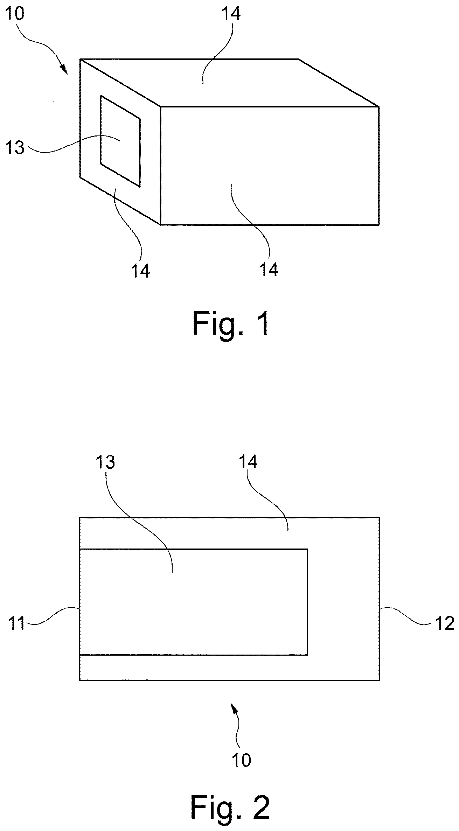

Ein Zahnersatzformblock 10 gemäß einem ersten Ausführungsbeispiel der Erfindung ist in den Fig. 1 und 2 dargestellt. Er ist quaderförmig und weist eine Oberfläche 11 und eine dieser gegenüberliegende zweite Oberfläche 12 auf. Ein Kern des Zahnersatzformblocks 10 besteht aus Titan als einem inneren Material 13. Auf dieses ist Zirkoniumdioxid als äußeres Material 14 aufgepresst. Dadurch besteht die erste Oberfläche 11 teilweise aus Titan und teilweise aus Zirkoniumdioxid, während alle anderen Oberflächen des Zahnersatzformblocks 10 ausschließlich aus Zirkoniumdioxid bestehen. Das innere Material 13 liegt an der Oberfläche 11 frei und ist dort rahmenförmig vom äußeren Material 14 umgeben. Alle anderen Oberflächen des Zahnersatzformblocks 10 werden von dem äußeren Material gebildet.

In einem zweiten und dritten Ausführungsbeispiel des Zahnersatzformblocks 10 besteht der Kern des Zahnersatzformblocks 10 aus Titan als einem inneren Material 13. Bei dem äußeren Material 14 handelt es sich um eine Cobalt-Chrom-Legierung (zweites Ausführungsbeispiel) oder um eine Glaskeramik (drittes Ausführungsbeispiel).

In einem vierten, fünften und sechsten Ausführungsbeispiel des Zahnersatzformblocks 10 besteht der Kern des Zahnersatzformblocks 10 aus Zirkoniumdioxid als einem inneren Material 13. Bei dem äußeren Material 14 handelt es sich um Titan (viertes Ausführungsbeispiel), eine Cobalt-Chrom-Legierung (fünftes Ausführungsbeispiel) oder um eine Glaskeramik (sechstes Ausführungsbeispiel).

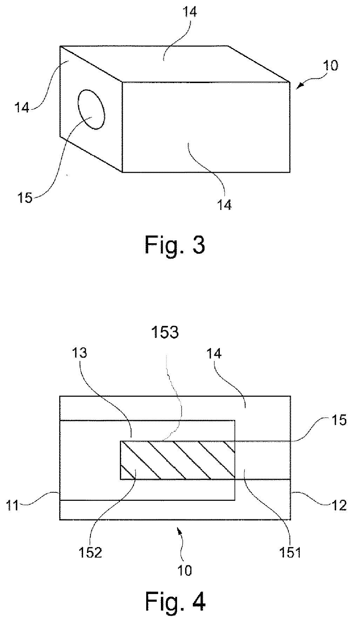

In einem siebten Ausführungsbeispiel des Zahnersatzformblocks 10, das in den Fig. 3 und 4 dargestellt ist, besteht dieser aus denselben Materialien wie in einem der vorhergehenden Ausführungsbeispiele. Ausgehend von der zweiten Oberfläche 12 geht verläuft eine Öffnung 15 durch das äu-ßere Material 14 in das Innere Material 13 hinein. Während der Bereich 151 im äußeren Material 14 glatte Innenwände aufweist, ist der Bereich 152 im inneren Material 13 mit einem Innengewinde versehen.

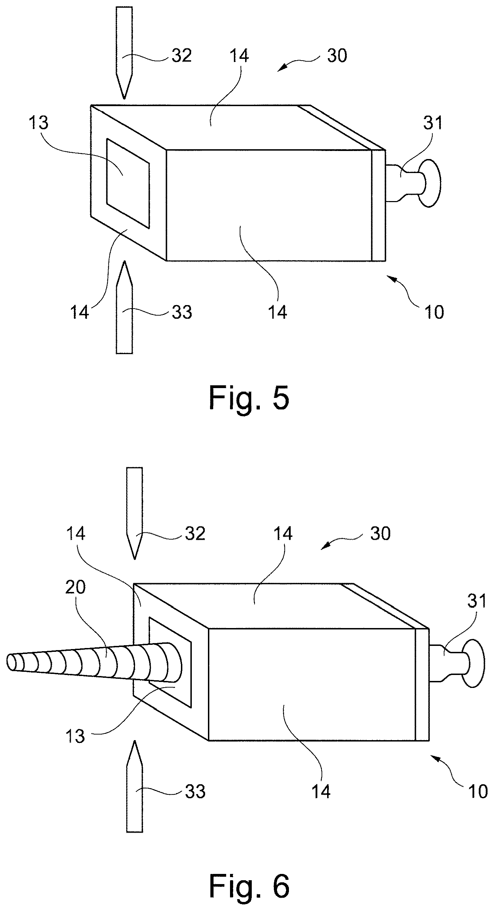

In einem ersten Ausführungsbeispiel des erfindungsgemäßen Verfahrens wird in einem dentalen CAD/CAM-System 30 eine gewünschte Form eines Zahnersatzteils in Abhängigkeit von Daten eines Patienten festgelegt. Diese Daten können beispielsweise mittels einer Intraoralkamera gewonnen werden. Dann wird ein Zahnersatzformblock 10 gemäß einem der voranstehend beschriebenen Ausführungsbeispiele in das CAD/CAM-System 30 eingesetzt und dort an seiner zweiten Oberfläche 12 mittels eines Blockhalters 31 fixiert. Dies ist in Fig. 5 gezeigt. Materialabtragungswerkzeuge 32, 33 werden oberhalb und unterhalb des Zahnersatzformblocks 10 positioniert.

Mittels der Materialabtragungswerkzeuge 32, 33 erfolgt beginnend an der ersten Oberfläche 11, eine Materialabtragung aus dem Zahnersatzformblock 10, um so zunächst einen Stift 20 mit einem selbstscheidenden Außengewinde zu bilden. Dies ist in Fig. 6 dargestellt. Hierzu wird in einem ersten Bereich des Zahnersatzformblocks 10 das äußere Material 14

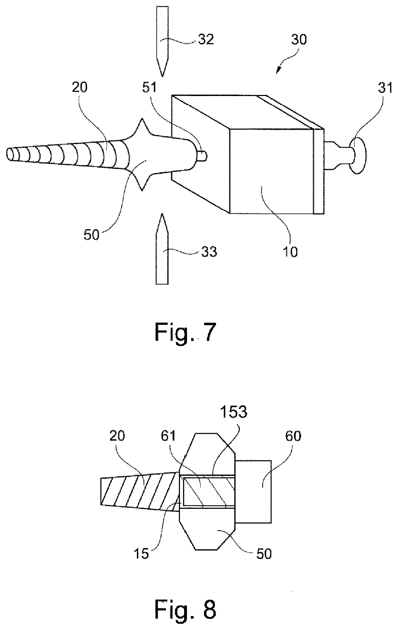

vollständig abgetragen. Das innere Material 13 wird in diesem Bereich teilweise abgetragen, um aus ihm den Stift 20 zu bilden. Wie in Fig. 7 dargestellt ist, wird anschließend ein Zahnersatzteil 50 gebildet, das am Ende der Materialabtragung nur noch über einen Abstich 51 mit dem Zahnersatzformblock 10 verbunden ist. Hierzu wird in einem zweiten Bereich des Zahnersatzformblocks 10 das äußere Material 14 teilweise abgetragen, ohne dass dabei das innere Material 13 in diesem zweiten Bereich freigelegt wird. Nach Entfernen des Abstichs 51 kann das fertige Zahnersatzteil 50, welches einstückig mit dem Stift 20 ausgebildet ist, aus dem CAD/CAM-System 30 entnommen werden.

Wurde das Zahnersatzteil 50 aus einem Zahnersatzformblock 10 gemäß seinem siebten Ausführungsbeispiel hergestellt, so weist es noch immer das Innengewinde zwischen dem Stift 20 und einer im Zuge der Materialabtragung erzeugten Oberfläche, welche dem Stift 20 gegenüberliegt, auf. Der Bereich 151 der Öffnung 15, welcher kein Innengewinde aufweist, wurde dabei vollständig abgetragen. Ein Zahnersatzversorgungselement 60 in Form eines Abutments kann mittels einer Schraube 61 in das Innengewinde eingeschraubt werden, wie in Fig. 8 dargestellt ist.

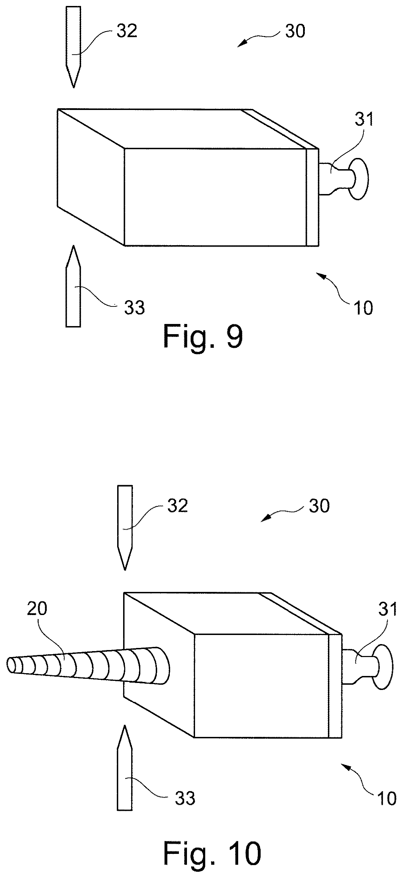

In einem zweiten Ausführungsbeispiel des erfindungsgemäßen Verfahrens wird ebenfalls in dem dentalen CAD/CAM-System 30 eine gewünschte Form eines Zahnersatzteils in Abhängigkeit von Daten eines Patienten festgelegt. Dann wird ein Zahnersatzformblock 10, der vollständig aus Zirkoniumdioxid besteht, in das CAD/CAM-System 30 eingesetzt und dort an seiner zweiten Oberfläche 12 mittels des Blockhalters 31 fixiert. Dies ist in Fig. 9 gezeigt. Mittels der Materialabtragungswerkzeuge 32, 33 erfolgt beginnend an der ersten Oberfläche 11, eine Materialabtragung aus dem Zahnersatzformblock 10, um so zunächst einen Stift 20 mit einem selbstschneidenden Außengewinde zu bilden. Dies ist in Fig. 10 dargestellt. Anschließend wird wiederum wie in Fig. 7 dargestellt ist ein Zahnersatzteil 50 gebildet, das am Ende der Materialabtragung nur noch über einen Abstich 51 mit dem Zahnersatzformblock 10 verbunden ist. Hierzu wird das Zirkoniumdioxid abgetragen. Nach Entfernen des Abstichs 51 kann das fertige Zahnersatzteil 50, welches einstückig mit dem Stift 20 ausgebildet ist und ausschließlich aus Zirkoniumdioxid besteht, aus dem CAD/CAM-System 30 entnommen werden.

Die voranstehend beschriebenen Beispiele des Zahnersatzformblocks und des Verfahrens ermöglichen die einteilige individualisierte Herstellung von Zahnersatzteilen in Form von Implantaten.

## Patentansprüche

1. Verfahren zur Herstellung eines Zahnersatzteils (50), umfassend:
- Bereitstellen eines Zahnersatzformblocks (10), wobei der Zahnersatzformblock (10) ein inneres Material (13) aufweist, das zumindest teilweise von einem äußeren Material (14) umgeben ist, dessen Härte sich von der Härte des inneren Materials (13) unterscheidet, wobei das innere Material (13) einen Teil einer ersten Oberfläche (11) des Zahnersatzformblocks (10) bildet, und
- Herstellung des Zahnersatzteils (50) durch Materialabtragung aus dem Zahnersatzformblock (10) mittels eines CAD/CAM-Verfahrens, **dadurch gekennzeichnet, dass** ein Stift (20) mit einem selbstschneidenden Außengewinde gebildet wird, wobei der Stift (20)aus einem Teil des inneren Materials (13) gebildet wird.

2. Verfahren nach Anspruch 1, **dadurch gekennzeichnet, dass** zuerst in einem ersten Bereich des Zahnersatzformblocks (10) der Stift (20) durch vollständiges Abtragen des äußeren Materials (14) und teilweises Abtragen des inneren Materials (13) gebildet wird und dann in einem zweiten Bereich des Zahnersatzformblocks (10) das äu-ßere Material (14) teilweise abgetragen wird, so dass das innere Material (13) im zweiten Bereich an keiner Oberfläche des Zahnersatzformblocks (10) freigelegt wird.

3. Verfahren nach einem der Ansprüche 1 bis 2, **dadurch gekennzeichnet, dass** der Zahnersatzformblock ein Innengewinde (15) aufweist, welches von einer zweiten Oberfläche (12), die der ersten Oberfläche (11) gegenüberliegt, in das innere Material hineinreicht.

4. Verfahren nach Anspruch 3, **dadurch gekennzeichnet, dass** das Zahnersatzteil (50) so hergestellt wird, dass ein Zahnersatzversorgungselement (60) in das Innengewinde (15) des Zahnersatzteils (50) eingeschraubt werden kann.

5. Verfahren nach einem der Ansprüche 1 bis 4, **dadurch gekennzeichnet, dass** die Herstellung des Zahnersatzteils (50) in Abhängigkeit von Daten eines Patienten erfolgt.

6. Verfahren nach einem der Ansprüche 1, 2 oder 5, **dadurch gekennzeichnet, dass** das innere Material (13) an der ersten Oberfläche (11) vollständig von dem äußeren Material (14) umgeben ist, und dass alle anderen Oberflächen des Zahnersatzformblocks aus dem äußeren Material (14) bestehen.

7. Verfahren nach einem der Ansprüche 1 bis 6, **dadurch gekennzeichnet, dass** das innere Material (13) eine geringere Härte als das äußere Material (14) aufweist.

8. Verfahren nach Anspruch 7, **dadurch gekennzeichnet, dass** das innere Material (13) ein Metall ist und das äußere Material (14) eine Keramik ist.

9. Verfahren nach Anspruch 7, **dadurch gekennzeichnet, dass** das innere Material (13) und das äußere Material (14) Metalle sind.

10. Verfahren nach einem der Ansprüche 1 bis 5, **dadurch gekennzeichnet, dass** das innere Material (13) eine grö-ßere Härte als das äußere Material (14) aufweist.

11. Verfahren nach Anspruch 10, **dadurch gekennzeichnet, dass** das innere Material (13) eine Keramik ist.

## Claims

1. Method for producing a dental prosthetic item (50), comprising:
- providing a dental prosthetic block (10), wherein the dental prosthetic block (10) has an inner material (13) which is at least partially surrounded by an outer material (14) whose hardness differs from the hardness of the inner material (13), wherein the inner material (13) forms part of a first surface (11) of the dental prosthetic block (10), and
- producing the dental prosthetic item (50) by removing material from the dental prosthetic block (10) by means of a CAD/CAM process, **characterized in that** a pin (20) with a self-tapping external thread is formed, wherein the pin (20) is formed from a part of the inner material (13).

2. Method according to Claim 1, **characterized in that** firstly in a first region of the dental prosthetic block (10) the pin (20) is formed by completely removing the outer material (14) and partially removing the inner material (13) and then in a second region of the dental prosthetic block (10) the outer material (14) is partially removed such that the inner material (13) is not exposed on any surface of the dental prosthetic block (10) in the second region.

3. Method according to one of Claims 1 to 2, **characterized in that** the dental prosthetic block has an internal thread (15) which extends from a second surface (12) opposite the first surface (11) into the inner material.

4. Method according to Claim 3, **characterized in that** the dental prosthetic item (50) is produced in such a way that a dental prosthetic supply element (60) can be screwed into the internal thread (15) of the dental prosthetic item (50).

5. Method according to one of Claims 1 to 4, **characterized in that** the dental prosthetic item (50) is produced in accordance with data of a patient.

6. Method according to one of Claims 1, 2 or 5, **characterized in that** the inner material (13) is completely surrounded by the outer material (14) on the first surface (11), and that all other surfaces of the dental prosthetic block consist of the outer material (14).

7. Method according to one of Claims 1 to 6, **characterized in that** the inner material (13) has a lower hardness than the outer material (14).

8. Method according to Claim 7, **characterized in that** the inner material (13) is a metal and the outer material (14) is a ceramic.

9. Method according to Claim 7, **characterized in that** the inner material (13) and the outer material (14) are metals.

10. Method according to one of Claims 1 to 5, **characterized in that** the inner material (13) has a greater hardness than the outer material (14).

11. Method according to Claim 10, **characterized in that** the inner material (13) is a ceramic.

## Revendications

1. Procédé de fabrication d'une prothèse dentaire (50), comprenant :
- La mise à disposition d'un bloc de moulage de prothèse dentaire (10), le bloc de moulage de prothèse dentaire (10) comprenant un matériau intérieur (13) qui est au moins partiellement entouré par un matériau extérieur (14) dont la dureté est différente de la dureté du matériau intérieur (13), le matériau intérieur (13) formant une partie d'une première surface (11) du bloc de moulage de prothèse dentaire (10), et
- La fabrication d'une prothèse dentaire (50) par enlèvement de matériau du bloc de moulage de prothèse dentaire (10) au moyen d'un procédé CAD/CAM, **caractérisé en ce qu'**une broche (20) est formée avec un filetage extérieur autotaraudeur, la broche (20) étant formée à partir d'une partie du matériau intérieur (13).

2. Procédé selon la revendication 1, **caractérisé en ce que** tout d'abord, dans une première zone du bloc de moulage de prothèse dentaire (10), la broche (20) est formée en enlevant complètement le matériau extérieur (14) et en enlevant partiellement le matériau intérieur (13), puis, dans une deuxième zone du bloc de moulage de prothèse dentaire (10), le matériau extérieur (14) est partiellement enlevé de sorte que le matériau intérieur (13) n'est exposé dans la deuxième zone sur aucune surface du bloc de moulage de prothèse dentaire (10).

3. Procédé selon l'une des revendications 1 à 2, **caractérisé en ce que** le bloc de moulage de prothèse dentaire présente un filetage intérieur (15),
qui s'étend dans le matériau intérieur à partir d'une deuxième surface (12) opposée à la première surface (11).

4. Procédé selon la revendication 3, **caractérisé en ce que** la prothèse dentaire (50) est fabriquée de telle sorte qu'un élément de restauration de prothèse dentaire (60) peut être vissé dans le filetage intérieur (15) de la prothèse dentaire (50).

5. Procédé selon l'une des revendications 1 à 4, **caractérisé en ce que** la fabrication de la prothèse dentaire (50) est effectuée en fonction des données d'un patient.

6. Procédé selon l'une des revendications 1, 2 ou 5, **caractérisé en ce que** le matériau intérieur (13) est entièrement entouré par le matériau extérieur (14) au niveau de la première surface (11), et **en ce que** toutes les autres surfaces du bloc de moulage de prothèse dentaire sont constituées par le matériau extérieur (14).

7. Procédé selon l'une des revendications 1 à 6, **caractérisé en ce que** le matériau intérieur (13) présente une dureté inférieure à celle du matériau extérieur (14).

8. Procédé selon la revendication 7, **caractérisé en ce que** le matériau intérieur (13) est un métal et le matériau extérieur (14) est une céramique.

9. Procédé selon la revendication 7, **caractérisé en ce que** le matériau intérieur (13) et le matériau extérieur (14) sont des métaux.

10. Procédé selon l'une des revendications 1 à 5, **caractérisé en ce que** le matériau intérieur (13) présente une dureté supérieure à celle du matériau extérieur (14).

11. Procédé selon la revendication 10, **caractérisé en ce que** le matériau intérieur (13) est une céramique.
